# EUROPEAN PATENT APPLICATION

(11) **EP 4 726 398 A1**
(43) Date of publication of application: **15.04.2026**
(21) Application number: 24838838.1
(22) Date of filing: 10.07.2024
(51) Int. Cl.: G01N 35/04

(54) **REACTION CUVETTE TRANSFER DEVICE AND REACTION UNIT**

(30) Priority: 12.07.2023 CN 202321823245 U
(71) Applicant: Chemclin Diagnostics (Shanghai) Co., Ltd., Pudong New Area, Shanghai 200131 (CN); Chemclin Diagnostics (Suzhou) Co., Ltd., Suzhou, Jiangsu 215163 (CN)
(72) Inventor: FANG, Quan, Suzhou, Jiangsu 215163 (CN); LIAN, Zifu, Suzhou, Jiangsu 215163 (CN); LI, Lin, Suzhou, Jiangsu 215163 (CN)
(74) Representative: Huang, Liwei
(86) International application number: PCT/CN2024/104778
(87) International publication number: WO 2025/011586

(57) **Abstract**

An embodiment of the disclosure provides a reaction cuvette transferring device applied to a reaction disk of a sample analyzer for pushing a reaction cuvette radially along the reaction disk, the reaction cuvette transferring device includes a reaction cuvette pusher assembly and a lateral movement structure. The reaction cuvette pusher assembly is configured to contact the reaction cuvette and apply a radial pushing force along the reaction disk; the reaction cuvette pusher assembly includes a cuvette discarding pusher assembly and a cuvette loading pusher assembly, the cuvette discarding pusher assembly includes a cuvette discarding pusher and a first pressure sensor, and the first pressure sensor is disposed on the cuvette discarding pusher; the cuvette loading pusher assembly includes a cuvette loading pusher and a second pressure sensor, and the second pressure sensor is disposed on the cuvette loading pusher. The lateral movement structure is connected to the reaction cuvette pusher assembly. The disclosure further discloses a reaction device and a sample analyzer adopting the reaction cuvette transferring device.

## Description

### CROSS-REFERENCE TO RELATED APPLICATION

The present application claims priority to Chinese patent application No. 202321823245.5, entitled "REACTION CUVETTE TRANSFERRING DEVICE AND REACTION DEVICE", filed on July 12, 2023, the disclosure of which is hereby incorporated by reference in its entirety. No new matter has been introduced.

### TECHNICAL FIELD

The present disclosure belongs to the technical field of detection equipment and specifically relates to a reaction cuvette transferring device and a reaction device.

### BACKGROUND

In the field of medical devices, reaction cuvettes are increasingly widely used. During the testing phase, reaction cuvettes need to carry a variety of test liquids and be transferred between multiple reaction disks; in light initiated chemiluminescence instruments, the reaction cuvette transferring and discarding assembly mainly function to transfer reaction cuvettes between various reaction disks and discard reaction cuvettes after the completion of reaction detection.

I During the analysis and detection process of the chemiluminescence immunoassay analyzer, a three-dimensional gripper is used to discard reaction cuvettes. The three-dimensional gripper has no requirements for the cuvette discarding structure, but the cuvette transfer and rotation structure for the matching reaction cuvettes involves a three-dimensional spatial mode, which is relatively complex and has high requirements for the stability of the chemiluminescent immunoassay analyzer; the three-dimensional gripper has poor reliability.

In some instruments, the cuvette loading assembly and the cuvette transferring and discarding assembly are separately arranged on the reaction disk; such separation into multiple components increases the cost.

### SUMMARY

The present disclosure provides a reaction cuvette transferring device and a reaction device with a compact structure and low cost.

In the first aspect, an embodiment of the disclosure provides a reaction cuvette transferring device, applied to a reaction disk of a sample analyzer for pushing a reaction cuvette radially along the reaction disk, the reaction cuvette transferring device includes a reaction cuvette pusher assembly and a lateral movement structure. The reaction cuvette pusher assembly is configured to contact the reaction cuvette and apply a radial pushing force along the reaction disk; the reaction cuvette pusher assembly includes a cuvette discarding pusher assembly and a cuvette loading pusher assembly, the cuvette discarding pusher assembly is configured to move the reaction cuvette to a next positioning point or a cuvette discarding channel, the cuvette discarding pusher assembly includes a cuvette discarding pusher and a first pressure sensor, and the first pressure sensor is disposed on the cuvette discarding pusher; the cuvette loading pusher assembly is configured to move the reaction cuvette from a cuvette loading position to a predetermined positioning point of the reaction disk or to a next positioning point, the cuvette loading pusher assembly includes a cuvette loading pusher and a second pressure sensor, and the second pressure sensor is disposed on the cuvette loading pusher. The lateral movement structure connected to the reaction cuvette pusher assembly and configured to drive the reaction cuvette pusher assembly to move laterally, thereby pushing the reaction cuvette to move radially along the reaction disk. The reaction cuvette pusher assembly further includes a support, and the cuvette discarding pusher assembly and the cuvette loading pusher assembly are both disposed on the support and adjacently arranged in a horizontal direction.

In one embodiment, the cuvette discarding pusher assembly further comprises a first drive motor fixed to the support, and the cuvette discarding pusher is connected to the first drive motor to move in a vertical direction.

In one embodiment, the cuvette discarding pusher comprises a first pusher body and a first shifting head connected to the first pusher body.

In one embodiment, the first shifting head extends in a vertical direction, the number of the first shifting heads is two, which are arranged at intervals in a horizontal direction, and a length of one of the two first shifting heads is greater than a length of another first shifting head.

In one embodiment, the cuvette loading pusher assembly comprises a second drive motor fixed on the support and arranged side by side and adjacent to the first drive motor in a horizontal direction, and the cuvette loading pusher is connected to the second drive motor to move in a vertical direction.

In one embodiment, the cuvette loading pusher comprises a second pusher body and a second shifting head connected to the second pusher body.

The first pressure sensor is disposed on the first pusher body or the first shifting head, and the second pressure sensor is disposed on the second pusher body or the second shifting head.

In one embodiment, the second shifting head extends in a vertical direction, the number of the second shifting heads is two which are arranged at intervals in a horizontal direction.

In one embodiment, the lateral movement structure comprises a lateral sliding assembly and a lateral drive assembly; the reaction cuvette pusher assembly is slidably mounted on the lateral sliding assembly, and the lateral drive assembly is configured to drive the reaction cuvette pusher assembly to slide laterally on the lateral sliding assembly.

In another aspect, an embodiment of the present disclosure provides a reaction device, including a reaction disk and the above-mentioned reaction cuvette transferring device. The reaction disk comprises a reaction turntable and a cuvette discarding channel, the reaction turntable is provided with N radial sliding grooves extending radially for arranging a reaction cuvette, a lateral sliding direction of the reaction cuvette transferring device is along a radial direction of the reaction turntable and located above one of the radial sliding grooves, and a reaction cuvette pushing and discarding operations are realized by the inward movement of the reaction cuvette pusher assembly along the reaction disk, wherein N is a natural number greater than 1.

In another aspect, an embodiment of the present disclosure provides a sample analyzer including the above-mentioned reaction device.

The reaction cuvette transferring device of this embodiment enables the reaction cuvette pusher assembly to move radially along the reaction disk via the lateral movement mechanism, so that the reaction cuvette pusher assembly can pass through the cuvette loading position, the cuvette transfer position and the cuvette discarding position during the sliding stroke. Thus, the reaction cuvette transferring device can simultaneously realize the cuvette loading, cuvette transfer and cuvette discarding operations without setting three separate assemblies, resulting in a simple structure and low cost. In addition, compared with the three-dimensional gripper, it does not require complex drive structures and algorithms, and the reliability is improved. The first pressure sensor and the second pressure sensor can sense the pressure applied to the cuvette discarding pusher and the cuvette loading pusher. When the pressure exceeds a certain threshold, the cuvette discarding pusher and the cuvette loading pusher can be controlled to stop moving, thereby preventing damage to the cuvette discarding pusher and the cuvette loading pusher due to excessive pressure.

It should be understood that the above-mentioned general description and the subsequent detailed description are only exemplary and explanatory and cannot limit the disclosure.

### BRIEF DESCRIPTION OF DRAWINGS

By describing the exemplary embodiments of the present disclosure in more detail with reference to the drawings, the above and other objectives, features and advantages of the present disclosure will become more apparent. In the exemplary embodiments of the present disclosure, the same reference numerals usually represent the same components.
Fig. 1 is a three-dimensional schematic diagram of a reaction cuvette transferring device according to a first embodiment of the present disclosure.
Fig. 2 is a schematic diagram of the reaction cuvette transferring device in Fig. 1 from another perspective.
Fig. 3 is a three-dimensional schematic diagram of the reaction cuvette pusher assembly of the reaction cuvette transferring device in Fig. 1.
Fig. 4 is a schematic diagram of the reaction cuvette pusher assembly in Fig. 3 from another perspective.
Fig. 5 is a three-dimensional schematic diagram of a reaction device according to a second embodiment of the present disclosure.
Fig. 6 is a schematic diagram of cooperation between the reaction cuvette pusher assembly and the reaction cuvette in the reaction device of Fig. 5.

### DETAILED DESCRIPTION

In order to make the objectives, technical solutions and advantages of the present disclosure clearer, the present disclosure will be further described in detail below with reference to the drawings and embodiments. It should be understood that the specific embodiments described herein are only used to explain the present disclosure and are not intended to limit the present disclosure.

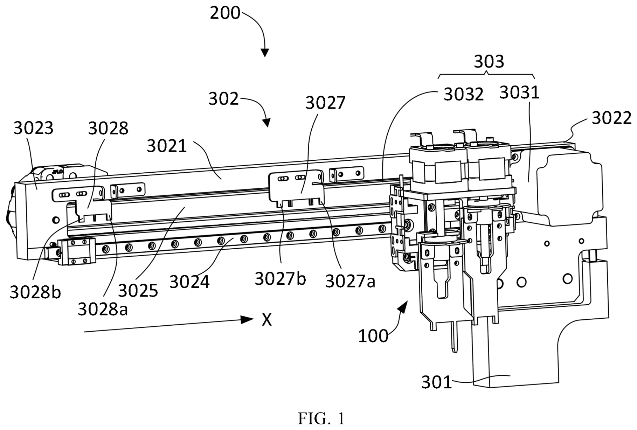

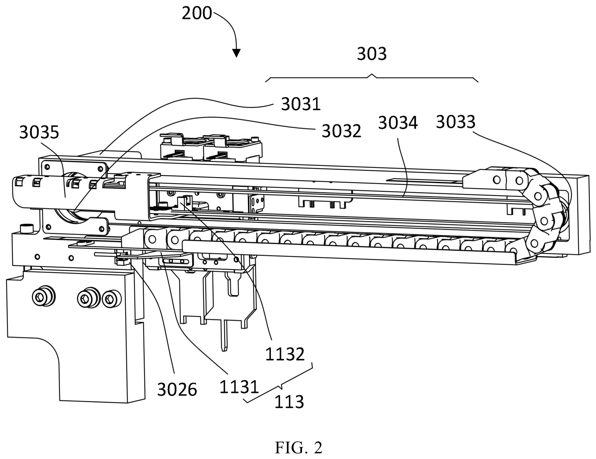

Please refer to Figs. 1 and 2, a first embodiment of the present disclosure provides a reaction cuvette transferring device 200, which is applied to a reaction disk of a sample analyzer for pushing reaction cuvettes radially along the reaction disk. The reaction cuvette transferring device 200 includes a reaction cuvette pusher assembly 100 and a lateral movement structure 30. The reaction cuvette pusher assembly 100 is configured to contact the reaction cuvette and apply a radial pushing force along the reaction disk; the lateral movement structure 30 is connected to the reaction cuvette pusher assembly 100 and can drive the reaction cuvette pusher assembly 100 to move laterally, for example, a linear movement along a X-axis direction in this embodiment, thereby pushing the reaction cuvette to move radially along the reaction disk.

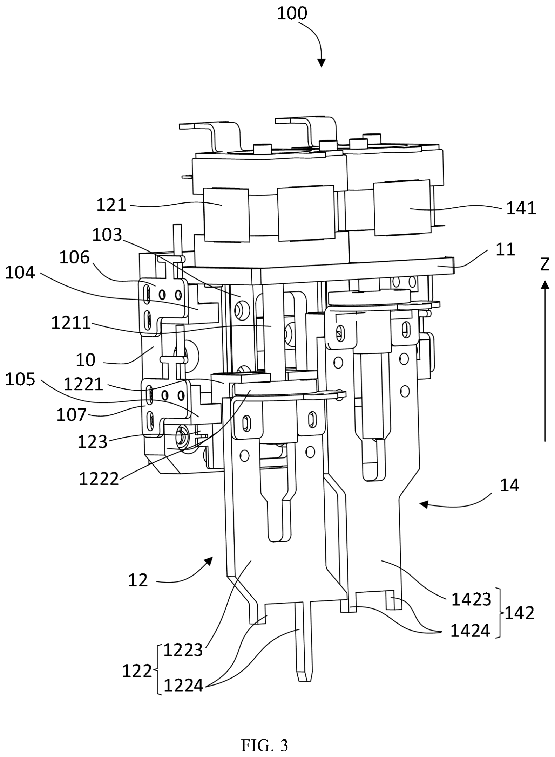

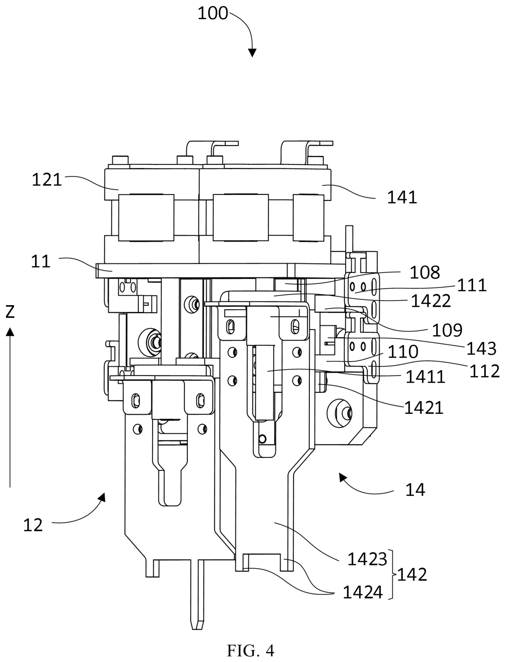

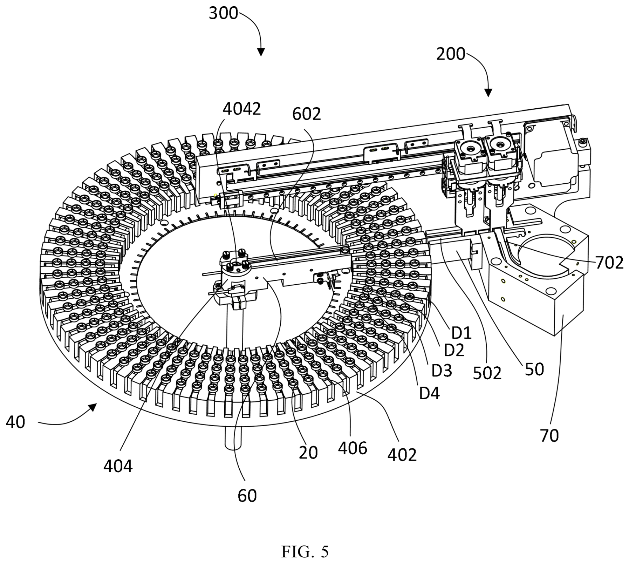

Please further refer to Figs. 3 and 4, an embodiment of the present disclosure provides a reaction cuvette pusher assembly 100, which includes a support 10, a cuvette discarding pusher assembly 12, and a cuvette loading pusher assembly 14. The cuvette discarding pusher assembly 12 and the cuvette loading pusher assembly 14 are disposed on the support 10, located on the same side of the support 10, adjacently arranged in a horizontal direction, and the cuvette discarding pusher assembly 12 and the cuvette loading pusher assembly 14 are movable along a vertical direction on the support 10. As shown in Fig. 5, the cuvette discarding pusher assembly 12 is configured to move the reaction cuvette 20 to a cuvette discarding channel 404 (as shown in Fig. 5) or a next positioning point; the cuvette loading pusher assembly 14 is configured to move the reaction cuvette 20 from a cuvette loading position to a predetermined positioning point of the reaction disk 40 or to a next positioning point.

In this embodiment, the support 10 is a support plate extending along a vertical direction for fixedly supporting the cuvette discarding pusher assembly 12 and the cuvette loading pusher assembly 14. This enables the cuvette discarding pusher assembly 12 and the cuvette loading pusher assembly 14 to be set as a combined component that can be driven by the support 10 to move synchronously, so that the same driving component can be used to drive both assemblies simultaneously, thereby simplifying the structure and saving costs.

The cuvette discarding pusher assembly 12 includes a first drive motor 121 and a cuvette discarding pusher 122. The first drive motor 121 is configured to drive the cuvette discarding pusher 122 to move along a Z-axis direction, so that the cuvette discarding pusher 122 reciprocates between an origin and a working position, wherein the Z-axis direction is vertical direction. The reaction cuvette pusher assembly 100 further includes a motor mounting member 11 fixedly connected to a mounting surface 102 of the support 10. In this embodiment, the motor mounting member 11 is a horizontally arranged mounting plate, and the first drive motor 121 is mounted on the motor mounting member 11. The motor mounting member 11 is disposed adjacent to an upper end of the support 10; the first drive motor 121 includes a first output shaft 1211 extending along the Z-axis direction and connected to the cuvette discarding pusher 122. When the first drive motor 121 operates, it can push the cuvette discarding pusher 122 to reciprocate along the Z-axis direction. In this embodiment, the first output shaft 1211 drives the cuvette discarding pusher 122 to move along the Z-axis direction via a screw drive method. In some embodiments, the first output shaft 1211 is a screw, and a screw flange 1222 fitted with the first output shaft 1211 is connected to the cuvette discarding pusher 122. The first output shaft 1211 rotates relative to the screw flange 1222 under the drive of the first drive motor 121, thereby driving the cuvette discarding pusher 122 to move along the Z-axis direction. In other optional manners, the first output shaft 1211 may be a telescopic rod that drives the cuvette discarding pusher 122 via a push-pull method.

The support 10 is further provided with a first linear guide rail 103 extending along the Z-axis direction. The cuvette discarding pusher 122 is connected to a first slider (not shown) slidably connected to the first linear guide rail 103. The cooperation between the first slider and the first linear guide rail 103 enables the cuvette discarding pusher 122 to move stably along the Z-axis direction. In this embodiment, a cuvette discarding pusher fixing seat 1221 is further disposed on the first slider, and the cuvette discarding pusher 122 is fixed on the cuvette discarding pusher fixing seat 1221, thereby more stably fixing the cuvette discarding pusher 122 to the first slider.

Along the Z-axis direction, a cuvette discarding origin sensor 104 and a cuvette discarding in-place sensor 105 are sequentially disposed on the support 10. The cuvette discarding pusher assembly 12 further includes a first sensing structure 123 cooperated with the cuvette discarding origin sensor 104 and the cuvette discarding in-place sensor 105. The first sensing structure 123 moves synchronously with the cuvette discarding pusher 122 along the Z-axis direction. When the cuvette discarding pusher 122 moves to an uppermost end along the Z-axis direction, the first sensing structure 123 moves to a sensing position of the cuvette discarding origin sensor 104, and at this time, the cuvette discarding origin sensor 104 senses that the cuvette discarding pusher 122 is located at the uppermost end along the Z-axis direction (i.e., the origin); when the cuvette discarding pusher 122 moves downward to the working position along the Z-axis direction, and at this time, the first sensing structure 123 moves to a sensing position of the cuvette discarding in-place sensor 105, and at this time, the cuvette discarding in-place sensor 105 senses that the cuvette discarding pusher 122 is located at the working position.

In this embodiment, the cuvette discarding origin sensor 104 and the cuvette discarding in-place sensor 105 are respectively fixed on the support 10 via a first sensor bracket 106 and a second sensor bracket 107; the cuvette discarding origin sensor 104 and the cuvette discarding in-place sensor 105 are respectively photoelectric sensors, and the first sensing structure 123 is a baffle connected to the cuvette discarding pusher fixing seat 1221. When the first sensing structure 123 moves to the cuvette discarding origin sensor 104 and the cuvette discarding in-place sensor 105, it blocks the light path of the photoelectric sensors and is sensed.

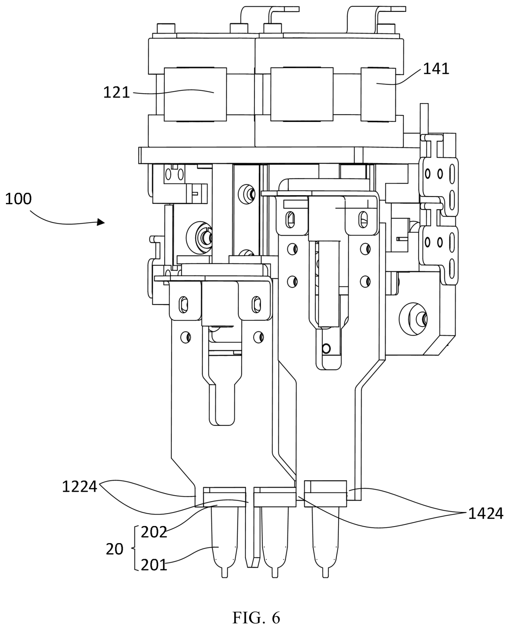

The cuvette discarding pusher 122 includes a first pusher body 1223 and a first shifting head 1224 connected to the first pusher body 1223. In this embodiment, the first shifting head 1224 extends along a vertical direction, the number of the first shifting heads 1224 is two, and a length of one of the two first shifting heads 1224 is greater than that of another first shifting head 1224. Please further refer to Fig. 5, the cuvette discarding pusher 122 is configured to push the reaction cuvette 20 to the cuvette discarding channel 404. As shown in Fig. 6, the reaction cuvette 20 includes a cuvette body 201 and a shoulder 202 disposed on an upper edge of the cuvette body 201 and protruding outward along a radial direction of the cuvette body 201. Generally, the shoulder 202 is a protruding structure surrounding the cuvette body 201 for a circle. During the cuvette discarding operation, the shoulder 202 is disposed between the two first shifting heads 1224, and the first shifting heads 1224 abut against the shoulder 202 to apply force to the reaction cuvette 20, thereby pushing the reaction cuvette 20 to the cuvette discarding channel 404. When discarding the reaction cuvette 20, in addition to abutting against the shoulder, the longer first shifting head 1224 can also abut against the cuvette body 201 when the reaction cuvette 20 is about to topple, so as to prevent the reaction cuvette 20 from toppling. After pushing the reaction cuvette 20 to the cuvette discarding channel 404, if the reaction cuvette 20 clogs the channel in the cuvette discarding channel 404, the longer first shifting head 1224 can also be used to extend into the cuvette discarding channel 404 to push the reaction cuvette 20 in the cuvette discarding channel 404 to move downward.

The structure of the cuvette loading pusher assembly 14 is similar to that of the cuvette discarding pusher assembly 12, and the cuvette loading pusher assembly 14 is arranged side by side with the cuvette discarding pusher assembly 12 and includes a second drive motor 141 and a cuvette loading pusher 142. The second drive motor 141 is configured to drive the cuvette loading pusher 142 to move along the Z-axis direction, so that the cuvette loading pusher 142 reciprocates between an origin and its working position. The second drive motor 141 is also mounted on the motor mounting member 11 and is arranged side by side and adjacent to the first drive motor 121 in a horizontal direction. The second drive motor 141 includes a second output shaft 1411 extending along the Z-axis direction and connected to the cuvette loading pusher 142. When the second drive motor 141 operates, it can push the cuvette loading pusher 142 to reciprocate along the Z-axis direction. In this embodiment, the second output shaft 1411 drives the cuvette loading pusher 142 to move along the Z-axis direction via a screw drive method. In some embodiments, the second output shaft 1411 is a screw, and a screw flange 1422 fitted with the second output shaft 1411 is connected to the cuvette loading pusher 142. The second output shaft 1411 rotates relative to the screw flange 1422 under the drive of the second drive motor 141, thereby driving the cuvette loading pusher 142 to move along the Z-axis direction. In other optional manners, the second output shaft 1411 may be a telescopic rod that drives the cuvette loading pusher 142 via a push-pull method.

The first drive assembly 121 and the second drive assembly 141 are fixed to the support 10 via the motor mounting member 11, which can keep the positions of the first drive assembly 121 and the second drive assembly 141 unchanged in the Z direction, so that the moving distances of the cuvette discarding pusher 122 and the cuvette loading pusher 142 in the Z direction can be controlled more accurately. It should be noted that the first drive assembly 121 and the second drive assembly 141 may also be directly fixed to the support 10, and the present disclosure is not limited to this embodiment.

The support 10 is further provided with a second linear guide rail 108 extending along the Z-axis direction. The cuvette loading pusher 142 is connected to a second slider (not shown) slidably connected to the second linear guide rail 108. The cooperation between the second slider and the second linear guide rail 108 enables the cuvette loading pusher 142 to move stably along the Z-axis direction. In this embodiment, a cuvette loading pusher fixing seat 1421 is further disposed on the second slider, and the cuvette loading pusher 142 is fixed on the cuvette loading pusher fixing seat 1421, thereby more stably fixing the cuvette loading pusher 142 to the second slider.

Along the Z-axis direction, a cuvette loading origin sensor 109 and a cuvette loading in-place sensor 110 are sequentially disposed on the support 10. The cuvette loading pusher assembly 14 further includes a second sensing structure 143 fitted with the cuvette loading origin sensor 109 and the cuvette loading in-place sensor 110. The second sensing structure 143 moves synchronously with the cuvette loading pusher 142 along the Z-axis direction. When the cuvette loading pusher 142 moves to an uppermost end along the Z-axis direction, the second sensing structure 143 moves to a sensing position of the cuvette loading origin sensor 109, and at this time, the cuvette loading origin sensor 109 senses that the cuvette loading pusher 142 is located at the uppermost end along the Z-axis direction (i.e., the origin); when the cuvette loading pusher 142 moves downward to the working position along the Z-axis direction, at this time, the second sensing structure 143 moves to a sensing position of the cuvette loading in-place sensor 110, and at this time, the cuvette loading in-place sensor 110 senses that the cuvette loading pusher 142 is located at the working position.

In this embodiment, the cuvette loading origin sensor 109 and the cuvette loading in-place sensor 110 are respectively fixed on the support 10 via a third sensor bracket 111 and a fourth sensor bracket 112; the cuvette loading origin sensor 109 and the cuvette loading in-place sensor 110 are respectively photoelectric sensors, and the second sensing structure 143 is a baffle connected to the cuvette loading pusher fixing seat 1421. When the second sensing structure 143 moves to the cuvette loading origin sensor 109 and the cuvette loading in-place sensor 110, it blocks a light path of the photoelectric sensors and is sensed.

The cuvette loading pusher 142 includes a second pusher body 1423 and a second shifting head 1424 connected to the second pusher body 1423. In this embodiment, the second shifting head 1424 extends along a vertical direction, the number of the second shifting heads 1424 is two which are arranged at intervals in a horizontal direction. Please further refer to Figs. 5 and 6. The cuvette loading pusher 142 is configured to push the reaction cuvette 20 at the cuvette loading position into the reaction disk 40. During the cuvette loading operation, the shoulder 202 of the reaction cuvette 20 is disposed between the two second shifting heads 1424, and the first shifting head 1224 abuts against the shoulder 202 to apply force to the reaction cuvette 20, thereby pushing the reaction cuvette 20 into the reaction disk 40.

In this embodiment, the cuvette discarding pusher assembly 12 further includes a first pressure sensor (not shown) disposed on the cuvette discarding pusher 122, for example, the first pusher body 1223 or the first shifting head 1224. When the cuvette discarding pusher 122 moves downward, if the first pusher body 1223 exerts downward pressure on the reaction cuvette 20 or the first shifting head 1224 contacts a certain structure due to abnormal operation, the first pressure sensor can sense the pressure received by the cuvette discarding pusher 122. When the pressure exceeds a certain threshold, the first drive motor 121 is controlled to stop working, thereby preventing the cuvette discarding pusher 122 from being damaged due to excessive pressure. Similarly, the cuvette loading pusher assembly 14 further includes a second pressure sensor (not shown) disposed on the second pusher body 1423, for example, the second pusher body 1423 or the second shifting head 1424. When the cuvette loading pusher 142 moves downward, if the second pusher body 1423 exerts downward pressure on the reaction cuvette 20 or the second shifting head 1424 contacts a certain structure due to abnormal operation, the second pressure sensor can sense the pressure received by the cuvette loading pusher 142. When the pressure exceeds a certain threshold, the second drive motor 141 is controlled to stop working, thereby preventing the cuvette loading pusher 142 from being damaged due to excessive pressure. As shown in Figs. 3, 4, and 6, when both the cuvette discarding pusher 122 and the cuvette loading pusher 142 are in the working position, there is a clamping space between the first shifting head 1224 adjacent to the cuvette loading pusher 142 and the second shifting head 1424 adjacent to the cuvette discarding pusher 122. When pushing the reaction cuvette 20, one reaction cuvette 20 can also be clamped between the adjacent first shifting head 1224 and second shifting head 1424 and pushed by the second shifting head 1424 or the first shifting head 1224. Thus, when both the cuvette discarding pusher 122 and the cuvette loading pusher 142 are in the working position, three reaction cuvettes 20 can be pushed to move simultaneously.

In the reaction cuvette pusher assembly 100 of this embodiment, the cuvette discarding pusher assembly 12 and the cuvette loading pusher assembly 14 are jointly disposed on the support 10. When performing two different functional operations of cuvette loading and cuvette discarding, the reaction cuvette pusher assembly 100 can be driven by the same driving device to complete the operations, without the need for separate multiple components. The structure is simpler, the cost is greatly reduced, and at the same time, the implementation space is saved; compared with the three-dimensional gripper, it does not require complex driving structures and algorithms, and the reliability is improved.

The lateral movement structure 30 includes a mounting base 301, a lateral sliding assembly 302 fixed to the mounting base 301, and a lateral driving assembly 303 mounted on the lateral sliding assembly 302. The lateral sliding assembly 302 extends along the X-axis direction, and the lateral driving assembly 303 is configured to drive the reaction cuvette pusher assembly 100 to move laterally (e.g., along the X-axis direction in this embodiment) on the lateral sliding assembly 302.

In this embodiment, the mounting base 301 is a vertically arranged mounting plate. The lateral sliding assembly 302 includes an elongated mounting plate 3021 extending along the X-axis direction. The mounting plate 3021 includes opposite first end 3022 and second end 3023. The first end 3022 is fixedly connected to the mounting base 301, and the fixing method includes but is not limited to screw fixing, clamping, or riveting. In this embodiment, the lateral driving assembly 303 includes a rotating motor 3031, a driving pulley 3032, a driven pulley 3033, a synchronous belt 3034, and a guide rail 3034. The rotating motor 3031 is fixedly mounted at the first end 3022, an output shaft of the rotating motor 3031 is connected to the driving pulley 3032, the driven pulley 3033 is connected to the second end 3023, and the synchronous belt 3034 is tightly sleeved on the driving pulley 3032 and the driven pulley 3033. The rotating motor 3031 drives the driving pulley 3032 to rotate, and the synchronous belt 3034 rotates and moves around the driving pulley 3032 and the driven pulley 3033 under the drive of the driving pulley 3032.

The reaction cuvette pusher assembly 100 is connected to the synchronous belt 3034, so as to slide back and forth between the first end 3022 and the second end 3023 along the lateral sliding assembly 302 under the drive of the synchronous belt 3034. In some embodiments, the mounting plate 3021 is provided with a slide rail 3024 extending along the X-axis direction and a slider (not shown) mounted on the slide rail 3024 and slidable along the slide rail. The reaction cuvette pusher assembly 100 is fixedly connected to the slider, so that the reaction cuvette pusher assembly 100 can slide along the slide rail 3024; the reaction cuvette pusher assembly 100 is connected to the synchronous belt 3034 via a mounting bracket 3035. In some embodiments, the cross-section of the mounting bracket 3035 is U-shaped, one end of which is connected to the synchronous belt 3034, and another end is connected to the reaction cuvette pusher assembly 100. The main structure of the rotating motor 3031 and the reaction cuvette pusher assembly 100 are disposed on the same side of the mounting plate 3021, and the synchronous belt 3034 and the mounting bracket 3035 are disposed on the opposite side of the mounting plate 3021. One end of the mounting bracket 3035 is fixedly connected to a surface of the synchronous belt 3034 located on an upper side, and another end of the mounting bracket 3035 bypasses a lower portion of the synchronous belt 3034 located on a lower side and is connected to the reaction cuvette pusher assembly 100. The mounting plate 3021 is provided with a through hole 3025 extending along the X-axis direction for the mounting bracket 3035 to pass through.

The mounting plate 3021 is further provided with an origin sensing member 3026, a cuvette transfer position sensing member 3027, and a cuvette discarding position sensing member 3028. Correspondingly, the reaction cuvette pusher assembly 100 is provided with a position sensing module 113. When the reaction cuvette pusher assembly 100 passes through the origin sensing member 3026, the cuvette transfer position sensing member 3027, and the cuvette discarding position sensing member 3028, and the corresponding sensing members sense the position sensing module 113, it indicates that the reaction cuvette pusher assembly 100 has reached the cuvette loading position, the cuvette transfer position, and the cuvette discarding position, respectively. At this time, the reaction cuvette pusher assembly 100 can be operated to perform corresponding operations. In this embodiment, the sensing between the position sensing module 113 and the origin sensing member 3026, the cuvette transfer position sensing member 3027, and the cuvette discarding position sensing member 3028 is photoelectric sensing. In some embodiments, the origin sensing member 3026 is a photoelectric sensor, and the position sensing module 113 includes a first baffle 1131. The photoelectric sensor includes a transmitting portion and a receiving portion. The transmitter emits visible light or invisible light (infrared light), and the receiver receives the corresponding light. When the first baffle 1131 moves to block the light emitted by the transmitter to the receiver, the position of the reaction cuvette pusher assembly 100 is sensed as being at the origin, and at this time, the reaction cuvette pusher assembly 100 can start the cuvette loading operation; the position sensing module 113 further includes a first photoelectric sensor 1132. The cuvette transfer position sensing member 3027 and the cuvette discarding position sensing member 3028 are both baffles. The sensing method between the first photoelectric sensor 1132 and the cuvette transfer position sensing member 3027 and the cuvette discarding position sensing member 3028 is the same as that between the origin sensing member 3026 and the first baffle 1131. Along the X-axis direction, the origin sensing member 3026, the cuvette transfer position sensing member 3027, and the cuvette discarding position sensing member 3028 are sequentially arranged along a direction from the first end 3022 to the second end 3023.

Further, the cuvette transfer position sensing member 3027 includes a cuvette transfer start sub-baffle 3027a and a cuvette transfer end sub-baffle 3027b, which are arranged along the X-axis direction, and the cuvette transfer start sub-baffle 3027a is closer to the first end 3022. When the first photoelectric sensor 1132 senses the cuvette transfer start sub-baffle 3027a, the reaction cuvette pusher assembly 100 starts the cuvette transfer operation; when the first photoelectric sensor 1132 senses the cuvette transfer end sub-baffle 3027b, the reaction cuvette pusher assembly 100 ends the cuvette transfer operation. Similarly, the cuvette discarding position sensing member 3028 includes a cuvette discarding start sub-baffle 3028a and a cuvette discarding end sub-baffle 3028b, which are arranged along the X-axis direction, and the cuvette discarding start sub-baffle 3028a is closer to the first end 3022. When the first photoelectric sensor 1132 senses the cuvette discarding start sub-baffle 3028a, the reaction cuvette pusher assembly 100 starts the cuvette discarding operation; when the first photoelectric sensor 1132 senses the cuvette discarding end sub-baffle 3028b, the reaction cuvette pusher assembly 100 ends the cuvette discarding operation.

In this embodiment, the lateral movement structure 30 includes a lateral sliding assembly 302 extending along the X-axis direction. The lateral driving assembly 303 drives the reaction cuvette pusher assembly 100 to move along the X-axis direction on the lateral sliding assembly 302. During the sliding stroke of the reaction cuvette pusher assembly 100, it includes a cuvette loading position, a cuvette transfer position, and a cuvette discarding position. Thus, the reaction cuvette transferring device 200 can simultaneously realize cuvette loading, cuvette transfer, and cuvette discarding operations without setting three separate assemblies, resulting in a simple structure and low cost.

Please refer to Fig. 5, a second embodiment of the present disclosure provides a reaction device 300, which includes a reaction disk 40 and the reaction cuvette transferring device 200 described in the first embodiment. The reaction disk 40 includes a reaction turntable 402 and a cuvette discarding channel 404. The reaction turntable 402 is provided with N radially extending sliding grooves 406 extending along its radial direction. The lateral sliding direction of the reaction cuvette transferring device 200 is along a radial direction of the reaction turntable 402 and located above one of the radial sliding grooves 406. Through the inward movement of the reaction cuvette pusher assembly 100 along the reaction disk 40, the transfer and discarding operations of the reaction cuvette 20 are realized. Wherein N is a natural number greater than 1, and this embodiment takes N=69 as an example for illustration; each radial sliding groove 406 can be provided with a plurality of reaction cuvettes 20. In this embodiment, each radial sliding groove 406 can be provided with four reaction cuvettes 20, which are respectively arranged at four radial positioning points of the radial sliding groove 406, namely positioning points D1, D2, D3, and D4 from outside to inside. The X direction of the reaction cuvette transferring device 200 is along a radial direction of the reaction turntable 402 and located above one of the radial sliding grooves 406. Through the movement of the cuvette discarding pusher assembly 12 and the cuvette loading pusher assembly 14 along the Z-axis direction, the clamping of the reaction cuvette 20 is realized, and through the movement of the reaction cuvette pusher assembly 100 along the X-axis direction on the lateral sliding assembly 302, the cuvette loading, transfer and discarding operations of the reaction cuvette 20 are realized.

The reaction device 300 further includes a cuvette loading slideway 50, a cuvette discarding slideway 60, and a cuvette arranging seat 70. The cuvette loading slideway 50 is arranged outside the reaction disk 40 and has a cuvette loading chute 502 for communicating and butting with the radial sliding groove 406. When cuvette loading is required, an outer end of the radial sliding groove 406 is butted and communicated with the cuvette loading chute 502; the cuvette arranging seat 70 is arranged adjacent to the cuvette loading slideway 50, and a cuvette outlet chute 702 of the cuvette arranging seat 70 is communicated with the cuvette loading chute 502. After the reaction cuvettes 20 are sorted in the cuvette arranging seat 70, they slide to the cuvette loading position of the cuvette loading chute 502 via the cuvette outlet chute 702. At this time, the cuvette loading of the reaction cuvette 20 can be realized via the cuvette loading pusher 142, that is, the reaction cuvette 20 is moved to the corresponding position of the radial sliding groove 406; the cuvette discarding slideway 60 is arranged inside the reaction disk 40 and has a cuvette discarding chute 602 for communicating and butting with the radial sliding groove 406. When cuvette discarding is required, an inner end of the radial sliding groove 406 is butted and communicated with the cuvette discarding chute 602; the cuvette discarding channel 404 is arranged at the central axis of the reaction disk 40, and a cuvette discarding hole 4042 extending along its axis is formed inside the cuvette discarding channel 404. The pre-discarded reaction cuvettes 20 that have completed the reaction and detection are discarded through the cuvette discarding hole 4042. The end of the cuvette discarding slideway 60 is arranged adjacent to the cuvette discarding channel 404, and the cuvette discarding chute 602 is communicated with the cuvette discarding hole 4042. When cuvette discarding is required, the cuvette discarding pusher 144 pushes the reaction cuvette 20 to move in the cuvette discarding chute 602 and finally moves into the cuvette discarding hole 4042 for discarding.

A third embodiment of the present disclosure provides a sample analyzer, including the reaction device described in the second embodiment.

Please refer to Figs. 1 to 6 together, a method for transferring and discarding cuvettes of the sample analyzer according to the embodiment of the present disclosure includes the following steps:
Step 4.1: moving the reaction cuvette transferring device 200 to the working position, enabling the reaction cuvette pusher assembly 100 to contact with a plurality of reaction cuvettes 20 adjacent to the reaction disk 40 in the radial direction; and
Step 4.2: the lateral movement structure 30 pushing inward along the radial direction of the reaction disk 40, enabling some reaction cuvettes 20 to move to the next radial positioning point of the reaction disk 40, and pushing the reaction cuvettes 20 to be discarded to the cuvette discarding channel inside the reaction disk for discarding.

The above-mentioned method is explained in detail as follows:
Driven by the lateral drive assembly 303, the reaction cuvette pusher assembly 100 moves to a position where the cuvette discarding pusher 122 is located above the positioning point D4. The cuvette discarding pusher 122 moves downward along the Z-axis to the working position under the drive of the first drive motor 121, and the two first shifting heads 1224 clamp the shoulder 202 of the reaction cuvette 20; the lateral drive assembly 303 drives the reaction cuvette pusher assembly 100 to move toward the cuvette discarding channel 404 until the reaction cuvette 20 is pushed into the cuvette discarding hole 4042, and drives the cuvette discarding pusher 122 to move upward to the origin.

The reaction cuvette pusher assembly 100 is driven to the cuvette transfer position, that is, the cuvette loading pusher 142 and the cuvette discarding pusher 122 are respectively located above the positioning point D1 and the positioning point D3; the cuvette loading pusher 142 and the cuvette discarding pusher 122 is driven to move downward to the working position. Please refer to Fig. 6, the two second shifting heads 1424 clamp the reaction cuvette 20 at the positioning point D1, the adjacent second shifting head 1424 and first shifting head 1224 clamp the reaction cuvette 20 at the positioning point D2, and the first shifting head 1224 clamps the reaction cuvette at the positioning point D3; the reaction cuvette pusher assembly 100 is driven to move inward of the reaction turntable 402 until the reaction cuvettes 20 at the positioning points D1, D2, and D3 move to the positioning points D2, D3, and D4, and the cuvette discarding pusher 122 and the cuvette loading pusher 142 move upward to the origin.

In addition, the above-mentioned method may further include the following steps:
When cuvette loading is required, the reaction cuvette 20 of the cuvette arranging seat 70 moves to the cuvette loading chute 502 of the cuvette loading channel 50 via the cuvette outlet chute 702. At this time, the reaction cuvette 20 is in the cuvette loading position, and the position sensing module 113 and the origin sensing member 3026 sense each other, that is, the origin sensing member 3026 senses the first baffle 1131; the second drive motor 141 drives the cuvette loading pusher 142 to move from the origin to the working position, the shoulder 202 of the reaction cuvette 20 is located between the two second shifting heads 1424 of the cuvette loading pusher 142, and the lateral drive assembly 303 is started to move the reaction cuvette 20 to the positioning point D1 on the reaction turntable 402; the reaction turntable 402 rotates in a predetermined manner until the next radial sliding groove 406 rotates to below the reaction cuvette transferring device 200, and the cuvette loading of the reaction cuvette 20 is performed in the same manner as above; repeat the above steps to load the cuvette at the positioning point D1.

When the positioning point D1 rotates N times, each time by the same predetermined rotation angle, for the reaction cuvette 20 at D1, the lateral drive assembly 303 is started to move the cuvette loading pusher 142 of the reaction cuvette pusher assembly 100 to above the positioning point D1. The second drive motor 141 drives the cuvette loading pusher 142 to move from the origin to the working position, and the lateral drive assembly 303 is started again to move the reaction cuvette 20 from the positioning point D1 to the positioning point D2. When moving a single reaction cuvette 20 in the same radial sliding groove 406, the above steps can be adopted, and the cuvette loading pusher 142, the cuvette discarding pusher 122, or the adjacent first shifting head 1224 and second shifting head 1424 of the cuvette loading pusher 142 and the cuvette discarding pusher 122 can be used. When moving two adjacent reaction cuvettes 20, the cuvette loading pusher 142 and the adjacent first shifting head 1224 and second shifting head 1424 of the cuvette loading pusher 142 and the cuvette discarding pusher 122, or the adjacent first shifting head 1224 and second shifting head 1424 of the cuvette loading pusher 142 and the cuvette discarding pusher 122 and the cuvette discarding pusher 122 can be used.

The reaction device 300 of this embodiment can only use the reaction cuvette transferring device 200 to perform discarding, transferring and loading operations on the reaction cuvettes 20 in the reaction disk 40 without being split into multiple components. The structure is more compact, the cost is reduced, and the layout space is saved; and the entire operation process is compact and simple with high reliability.

In the drawings of this embodiment, the same or similar reference numerals correspond to the same or similar components; in the description of the present disclosure, it should be understood that if there are terms such as "upper", "lower", "left", "right" indicating orientations or positional relationships, they are based on the orientations or positional relationships shown in the drawings, which are only for the convenience of describing the present disclosure and simplifying the description, rather than indicating or implying that the referred device or element must have a specific orientation, be constructed and operated in a specific orientation. Therefore, the terms describing positional relationships in the drawings are only for exemplary illustration and cannot be understood as limitations on this patent. For those of ordinary skill in the art, the specific meanings of the above terms can be understood according to specific situations. The above descriptions are only preferred embodiments of the present disclosure and are not intended to limit the present disclosure; any modifications, equivalent replacements and improvements made within the spirit and principles of the present disclosure shall be included in the protection scope of the present disclosure.

## Claims

1. A reaction cuvette transferring device (200), applied to a reaction disk (40) of a sample analyzer for pushing a reaction cuvette (20) radially along the reaction disk (40), the reaction cuvette transferring device (200) comprising:
a reaction cuvette pusher assembly (100) configured to contact the reaction cuvette (20) and apply a radial pushing force along the reaction disk (40), the reaction cuvette pusher assembly (100) including:
a cuvette discarding pusher assembly (12) configured to move the reaction cuvette (20) to a next positioning point or a cuvette discarding channel (404), the cuvette discarding pusher assembly (12) including a cuvette discarding pusher (122) and a first pressure sensor, the first pressure sensor being disposed on the cuvette discarding pusher (122);
a cuvette loading pusher assembly (14) configured to move the reaction cuvette (20) from a cuvette loading position to a predetermined positioning point of the reaction disk (40) or to a next positioning point, the cuvette loading pusher assembly (14) including a cuvette loading pusher (142) and a second pressure sensor, the second pressure sensor being disposed on the cuvette loading pusher (142); and
a lateral movement structure (30) connected to the reaction cuvette pusher assembly (100) and configured to drive the reaction cuvette pusher assembly (100) to move laterally, thereby pushing the reaction cuvette (20) to move radially along the reaction disk (40);
wherein the reaction cuvette pusher assembly further includes a support (10), and the cuvette discarding pusher assembly (12) and the cuvette loading pusher assembly (14) are both disposed on the support (10) and adjacently arranged in a horizontal direction.

2. The reaction cuvette transferring device (200) according to claim 1, wherein
the cuvette discarding pusher assembly (12) further comprises a first drive motor (121) fixed to the support (10), and the cuvette discarding pusher (122) is connected to the first drive motor (121) to move in a vertical direction.

3. The reaction cuvette transferring device (200) according to claim 2, wherein
the cuvette discarding pusher (122) comprises a first pusher body (1223) and a first shifting head (1224) connected to the first pusher body (1223).

4. The reaction cuvette transferring device (200) according to claim 3, wherein
the first shifting head (1224) extends in a vertical direction, the number of the first shifting heads is two, which are arranged at intervals in a horizontal direction, and a length of one of the two first shifting heads (1224) is greater than a length of another first shifting head (1224).

5. The reaction cuvette transferring device (200) according to claim 3, wherein
the cuvette loading pusher assembly (14) comprises a second drive motor (141) fixed on the support (10) and arranged parallel and adjacent to the first drive motor (121) in a horizontal direction, and the cuvette loading pusher (142) is connected to the second drive motor (141) to move in a vertical direction.

6. The reaction cuvette transferring device (200) according to claim 5, wherein
the cuvette loading pusher (142) comprises a second pusher body (1423) and a second shifting head (1424) connected to the second pusher body (1423).

7. The reaction cuvette transferring device (200) according to claim 6, wherein
the first pressure sensor is disposed on the first pusher body (1223) or the first shifting head (1224), and the second pressure sensor is disposed on the second pusher body (1423) or the second shifting head (1424).

8. The reaction cuvette transferring device (200) according to claim 6, wherein
the second shifting head (1424) extends in a vertical direction, the number of the second shifting heads is two which are arranged at intervals in a horizontal direction.

9. The reaction cuvette transferring device (200) according to any one of claims 1 to 8, wherein
the lateral movement structure (30) comprises a lateral sliding assembly (302) and a lateral drive assembly (303), the reaction cuvette pusher assembly (100) is slidably mounted on the lateral sliding assembly (302), and the lateral drive assembly (303) is configured to drive the reaction cuvette pusher assembly (100) to slide laterally on the lateral sliding assembly (302).

10. A reaction device (300), comprising a reaction disk (40) and the reaction cuvette transferring device (200) according to any one of claims 1 to 9,
the reaction disk (40) comprises a reaction turntable (402) and a cuvette discarding channel (404), the reaction turntable (402) is provided with N radial sliding grooves (406) extending radially for arranging a reaction cuvette (20), a lateral sliding direction of the reaction cuvette transferring device (200) is along a radial direction of the reaction turntable (402) and is located above one of the radial sliding grooves (406), and the reaction cuvette pushing and discarding operations are realized by the inward movement of the reaction cuvette pusher assembly (100) along the reaction disk (40), wherein N is a natural number greater than 1.
